# NEW EUROPEAN PATENT SPECIFICATION

(11) **EP 2 956 261 B2**
(45) Date of publication and mention of the opposition decision: **12.02.2025**
(45) Mention of the grant of the patent: 04.04.2018
(21) Application number: 14705391.2
(22) Date of filing: 11.02.2014
(51) Int. Cl.: B22F 3/105, B29C 64/153, B29C 64/386, B23K 26/142, B33Y 30/00, B33Y 50/02

(54) **SELECTIVE LASER SOLIDIFICATION APPARATUS AND METHOD**
VORRICHTUNG UND VERFAHREN FÜR SELEKTIVE LASERERSTARRUNG
PROCÉDÉ ET APPAREIL DE SOLIDIFICATION SÉLECTIVE PAR LASER

(30) Priority: 14.02.2013 GB 201302602; 05.03.2013 GB 201303920; 07.03.2013 US 201361774215 P; 15.03.2013 US 201361791636 P
(43) Date of publication of application: 23.12.2015
(60) Divisional application: 17209698.4
(73) Proprietor: Renishaw Plc., Wotton-Under-Edge, Gloucestershire GL12 8JR (GB)
(72) Inventor: FERRAR, Ben, Ian, Stoke-on-Trent Staffordshire ST7 2XY (GB)
(74) Representative: Matthews, Paul
(86) International application number: PCT/GB2014/050389
(87) International publication number: WO 2014/125258

(56) References cited:
- EP-A1- 1 583 626
- EP-A1- 2 431 113
- EP-A1- 2 492 084
- EP-A2- 1 839 781
- EP-B1- 0 617 657
- WO-A1-00/30789
- WO-A1-2009/156316
- WO-A1-92/08592
- WO-A1-98/24574
- WO-A2-2006/024373
- WO-A2-2014/125280
- WO-A2-88/02677
- DE-A1- 10 042 132
- DE-A1- 10 112 591
- DE-A1- 10 208 150
- DE-A1- 102004 031 881
- DE-A1- 102004 057 866
- DE-A1- 102006 059 851
- DE-A1- 102010 052 206
- GB-A- 2 046 801
- JP-U- S62 151 091
- US-A- 5 017 317
- US-A- 5 155 324
- US-A- 5 352 405
- US-A1- 2002 015 654
- US-A1- 2005 142 024
- US-A1- 2006 192 322
- Dadbaksh, S e.a. "Effect of selective laser melting layout on the quality of stainless steel parts",Rapid prototyping Journal, Vol.18, No.3, 2012, Pg.241-249
- EOS GmbH - Electro Optical Systems, Bedienungsanleitung EOSINT M280/PSW 3.5, EOS GmbH 2011
- EOS GmbH - Electro Optical Systems, Technical Description EOSINT M280, EOS GmbH, 2010
- FERRAR B ET AL: "Gas flow effects on selective laser melting (SLM) manufacturing performance", JOURNAL OF MATERIALS PROCESSING TECHNOLOGY, ELSEVIER, NL, vol. 212, no. 2, 26 September 2011 (2011-09-26), pages 355 - 364, XP028119930, ISSN: 0924-0136, [retrieved on 20111002], DOI: 10.1016/J.JMATPROTEC.2011.09.020

## Description

The present invention relates to selective laser solidification and in particular to an improved selective laser melting process and apparatus in which an order in which objects or parts of objects are built is selected based on a direction of gas flow.

### Background

Additive manufacturing or rapid prototyping methods for producing objects comprise layer-by-layer solidification of a material, such as a metal powder material, using a laser beam. A powder layer is deposited on a powder bed in a build chamber and a laser beam is scanned across portions of the powder layer that correspond to a cross-section of the object being constructed. The laser beam melts or sinters the powder to form a solidified layer. After selective solidification of a layer, the powder bed is lowered by a thickness of the newly solidified layer and a further layer of powder is spread over the surface and solidified, as required. In a single build, more than one object can be built, the objects spaced apart in the powder bed.

During the melting or sintering process, debris (e.g. condensate, unsolidified particles of powder etc) is produced within the build chamber. It is known to introduce a gas flow through the build chamber in an attempt to remove debris from the chamber in the gas flow. For example, the M280 model of machine produced by EOS GmbH, Munich, Germany comprises a series of gas outlet nozzles located to the rear of the powder bed that pass a flow of gas to a series of exhaust vents that are located at the front of the powder bed. In this manner, a planar layer of gas flow is created at the surface of the powder bed. A similar arrangement is provided in Renishaw's AM250 and AM125 machines, wherein apertures at either side of a powder bed provide substantially planar gas flow across the powder bed. It has been found that debris can be blown from one section of an object to another section of the or another object. This can result in non-uniformity and increased porosity of the solidified metal layers generated by the melting process. In particular, debris blown across the powder bed can result in an increase in surface roughness such that pores are formed between adjacent layers. Non-uniformities in a build can result in an object not conforming to the desired design and damage the apparatus. In particular, a wiper blade is typically used to spread each powder layer across the powder bed. Solidified structures that project out of the powder bed can catch on and cause damage to the wiper blade. Damaged wiper blades may result in powder layers with ridges of powder. Accordingly, non-uniformities in a build may be a concern not just for the layer being formed, but powder layers formed thereafter.

EP 2492084 discloses an apparatus and method for manufacturing 3D objects by means of SLS. The apparatus comprises a powder bed onto which a powder layer can be deposited, a gas flow unit for passing a flow of gas over the powder bed along a gas flow direction, a laser scanning unit for scanning a laser beam over the powder layer to selectively solidify at least part of the powder layer to form one or more objects and a processing unit for selecting a scanning sequence of the laser beam.

US 5352405 discloses a method and apparatus for fabricating three-dimensional objects by SLS. In order to reduce inconsistencies in structural and textural integrity, and in thermal effects that can cause distortion, methods for ensuring that overlapping laser scans are accomplished in a consistent manner relative to the thermal flow from the sintered locations are utilized.

WO 92/08592 discloses an apparatus for fabricating parts by selective laser sintering is disclosed, which includes a baffle (40) for directing gas at the target surface (4). The baffle (40) may direct the gas directly at the target surface, or may be constructed so that the gas spirals toward the target surface (4) in cyclonic fashion; further alternative baffles can be used to direct the gas at the target surface in a non-uniform, fashion, including turbulent or arbitrary flow patterns.

DE 10 208150 discloses how solid articles (8) are built up in layers from liquid or powder raw material (4) using irradiation with a steered beam (16), preferably a laser beam. Especially near the edge regions, the beam (16) is controlled so that the impact zone (30) oscillates. The motion includes forward and backward components as the consolidated strip of material is built up in the forward direction.

### Summary of Invention

According to a first aspect of the invention there is provided a selective laser solidification apparatus according to claim 1.

The scanning sequence is selected such that debris produced by the scan is carried away from areas of the powder layer which are yet to be scanned. In this way, these areas of powder are not disturbed and contaminated by the debris ensuring that, when these areas are solidified, the solidified layer is built to a desired, uniform height. Debris produced in forming the upwind area may be blown onto the already formed downwind area but this debris may be removed by the wiper and, if not removed, covered by the next powder layer to be remelted when forming the next cross-section. Accordingly, scanning areas in this order is less likely to result in non-uniformities in the build.

The one or more objects may be formed through the solidification of separate islands in at least one powder layer, the processing unit arranged to select an order in which islands are formed based upon the relative location of the islands in the at least one powder layer and the gas flow direction.

The order in which islands are formed may be selected such that debris produced by forming an island is carried away from areas of the powder layer in which islands are yet to be formed. In this way, these areas of powder are not disturbed and contaminated by the debris ensuring that, when these areas are solidified, the solidified layer is built to a desired, uniform height. For example, the processing unit may select to form at least part of an island before at least part of another island because the at least part of the island is located downwind in the gas flow direction of at least part of the other island. Debris produced in forming the upwind island may be blown onto the already formed downwind island but this debris will be covered by the next powder layer and the debris is likely to be remelted when forming the next cross-section. Accordingly, building the islands in this order is less likely to result in non-uniformities in the build.

For islands wherein a first island is located wholly downwind of a second island, the processing unit may be arranged to select to form the first island completely before forming the second island. However, if a first island is located to at least partially surround a second island such that parts of the first island are downwind and other parts of the first island are upwind of the second island, the processing unit may be arranged to select to form at least part of the second island in between forming the downwind and upwind parts of the first island.

The processing unit may determine an order in which areas should be scanned by projecting a debris fallout zone that would be created when solidifying each area and determining whether one or more other areas to be solidified fall within the debris fallout zone, the processing unit selecting to solidify the one or more other areas that fall within the debris fallout zone before solidifying the area from which the debris fallout zone has been projected. The debris fallout zone may be projected as a pair of parallel lines extending in the gas flow direction from outmost edges of the area in a direction perpendicular to the gas flow direction. Such a debris fallout zone may be suitable when the gas flow is a laminar gas flow (Reynolds number less than 2000). However, it may also be desirable to project the debris fallout zone as diverging lines at a slight angle to the gas flow direction to take into account slight turbulence in the gas flow that may cause the debris to be deposited beyond the outmost edges of the area in a direction perpendicular to the gas flow direction. More complex models of the region over which debris may be deposited may be used requiring more complex projections of the debris fallout zone. For example, areas to be solidified that are located close to an edge of the powder bed may be subjected to more turbulent flow because these areas are closer to the sidewalls of a build chamber than areas located centrally in the powder bed.

The apparatus may comprise an interface for the user to identify the one or more objects to be formed. The user may select the locations on a build platform where the one or more objects are to be built. Alternatively, the processing unit may be arranged to select the locations on a build platform for the one or more objects. The processor may select the location for one or more of the objects based upon the debris fallout zone of an object whose location has already been selected.

The laser scanning unit may be arranged for scanning a laser beam over the powder layer to selectively solidify at least part of the powder layer to form a required pattern, the required pattern being formed from a plurality of stripes or stripe segments, each stripe or stripe segment being formed by advancing the laser beam along the stripe or stripe segment in a stripe formation direction. If the laser scanning unit is arranged in this way, the stripe formation direction may not always be at least partially opposed to the predefined gas flow direction.

According to a second aspect of the invention there is provided a method of selecting a scanning sequence of a laser beam in a selective laser solidification process according to claim 9.

According to a third aspect of the invention there is provided a data carrier having instructions stored thereon according to claim 10.

According to a fourth aspect of the invention there is provided apparatus for selecting a scanning sequence of a laser beam in a selective laser solidification process, in which one or more objects are formed layer-by-layer by, repeatedly, depositing a layer of powder on a powder bed and scanning a laser beam over the deposited powder to selectively solidify at least part of the powder layers, wherein a gas flow is passed over the powder bed in a gas flow direction, the apparatus comprising a processing unit, a display and a user input device characterised by the processing unit being arranged to receive data on one or more objects, including a location of the objects on a build platform, determine a fallout zone, cause the display to display an image of areas to be solidified, wherein the debris fallout zone is projected from each area, and receive a user input from the user input device of an order in which the areas are to be scanned.

According to a fifth aspect of the invention there is provided a data carrier for selecting a scanning sequence of a laser beam in a selective laser solidification process, in which one or more objects are formed layer-by-layer by, repeatedly, depositing a layer of powder on a powder bed and scanning a laser beam over the deposited powder to selectively solidify at least part of the powder layers, wherein a gas flow is passed over the powder bed in a gas flow direction characterised by the data carrier having instructions thereon, which, when executed by a processor, cause the processor to receive data on one or more objects, including a location of the objects on a build platform, determine a debris fallout zone, cause a display to display an image of areas to be solidified, wherein a debris fallout zone is projected from each area, and receive a user input from a user input device of an order in which the areas are to be scanned.

The debris fallout zone may be an area of the powder layer across which it is predicted debris (generated during solidification of the powder) may fall as a result of being carried by the gas flow.

The method may include selecting a location in which objects are built in a selective laser solidification process, in which one or more objects are formed layer-by-layer by, repeatedly, depositing a layer of powder on a powder bed and scanning a laser beam over the deposited powder to selectively solidify at least part of the powder layers, wherein a wiper spreads powder over the powder bed in at a wiping direction to form each powder layer, the method comprising selecting a location in which one or more objects are to be built in the powder bed based upon the wiping direction.

The location for the one or more objects may be selected to minimise or prevent debris generated during solidification of one area of the powder bed being spread by the wiper onto another area of the powder bed to be solidified.

The wiper may move back and forth across the powder bed, the wiper arranged to spread powder in both or only one of the directions.

The apparatus is preferably for designing a build of objects to be built is s selective solidification process, in which one or more objects are formed layer-by-layer by, repeatedly, depositing a layer of powder on a powder bed, wherein the depositing step comprises using a wiper for spreading powder over the powder bed in at least one wiping direction to form the powder layer, and scanning a laser beam over the deposited powder to selectively solidify at least part of the powder layers, wherein, the apparatus comprises a processing unit, a display and a user input device, the processing unit arranged to receive data on a plurality of objects, including a defined location of at least one of the objects in the powder bed, cause the display to display for each object having a defined location, an image of areas of the powder bed to be solidified to form the object and a debris spreading zone projecting from each area, and receive a user input from the user input device of a location for at least one of the plurality of objects.

By displaying an image of the debris spreading zone(s) for one object located in the powder bed, a user can select a location of another object in the powder bed based upon the displayed debris spreading zone(s).

The debris spreading zone may be an area of the powder layer across which it is predicted debris (generated during solidification of the powder) may be spread by the wiper.

The data carrier of the above aspects of the invention may be a suitable medium for providing a machine with instructions such as non-transient data carrier, for example a floppy disk, a CD ROM, a DVD ROM / RAM (including - R/-RW and +R/ + RW), an HD DVD, a BIu Ray(TM) disc, a memory (such as a Memory Stick(TM), an SD card, a compact flash card, or the like), a disc drive (such as a hard disk drive), a tape, any magneto/optical storage, or a transient data carrier, such as a signal on a wire or fiber optic or a wireless signal, for example a signals sent over a wired or wireless network (such as an Internet download, an FTP transfer, or the like).

### Description of the Drawings

Embodiments of the invention will now be described, as examples only, with reference to the accompanying drawings, in which:-
**Figure 1** is a schematic view of a laser solidification apparatus according to one embodiment of the invention;
**Figure 2** is a schematic view of the laser solidification apparatus from another side;
**Figure 3** is a flowchart showing steps of a method according to the invention;
**Figure 4** is a plan view of islands to be solidified on a build platform of the apparatus, wherein debris fallout zones have been projected; and
**Figure 5** is a plan view of islands to be solidified on a build platform of the apparatus, wherein debris fallout zones according to a different embodiment of the invention have been projected.

### Description of Embodiments

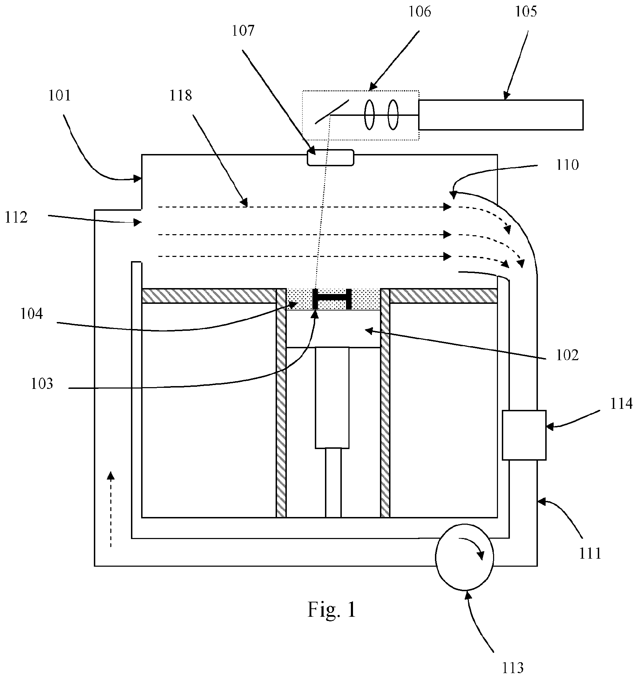

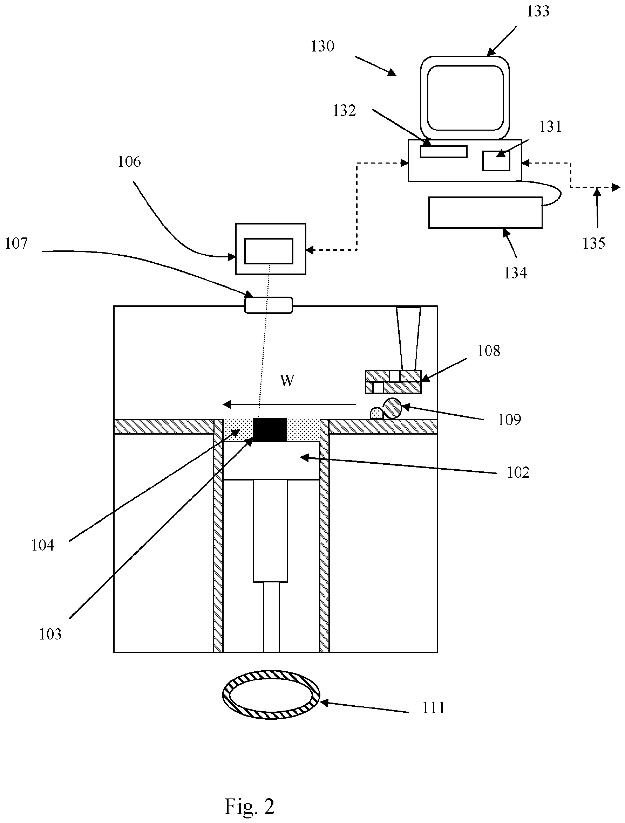

Referring to Figures 1 and 2, a laser solidification apparatus according to an embodiment of the invention comprises a build platform 102 for supporting an object 103 built by selective laser melting powder 104. The platform 102 can be lowered in the chamber 101 as successive layers of the object 103 are formed. Layers of powder 104 are formed as the object 103 is built by dispensing apparatus 108 and a wiper 109. For example, the dispensing apparatus 109 may be apparatus as described in WO2010/007396. A laser module 105 generates a laser for melting the powder 104, the laser directed as required by optical module 106 under the control of a computer 130. The laser enters the build chamber via a window 107.

An inlet 112 and outlet 110 are arranged for generating a gas flow across the powder bed formed on the build platform 102. The inlet 112 and outlet 110 are arranged to produce a laminar flow having a flow direction from the inlet to the outlet, as indicated by arrows 118. Gas is re-circulated from the outlet 110 to the inlet 112 through a gas recirculation loop 111. A pump 113 maintains the desired gas pressure at inlet 112 and openings 5, 6. A filter 114 is provided in the recirculation loop 111 to filter from the gas condensate that has become entrapped in the flow. It will be understood that more than one inlet 112 may be provided in the build chamber 101. Furthermore, rather than extending outside of the build chamber 101, the recirculation loop 111 may be contained within the build chamber 101.

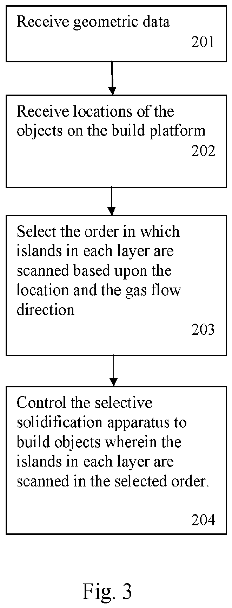

Computer 130 comprises a processor unit 131, memory 132, display 133, user input device 135, such as a keyboard, touch screen, etc, a data connection to modules of the laser sintering unit, such as optical module 106 and laser module 105, and an external data connection 135. Stored on memory 132 is a computer program that instructs the processing unit to carry out the method described with reference to Figures 3 to 5.

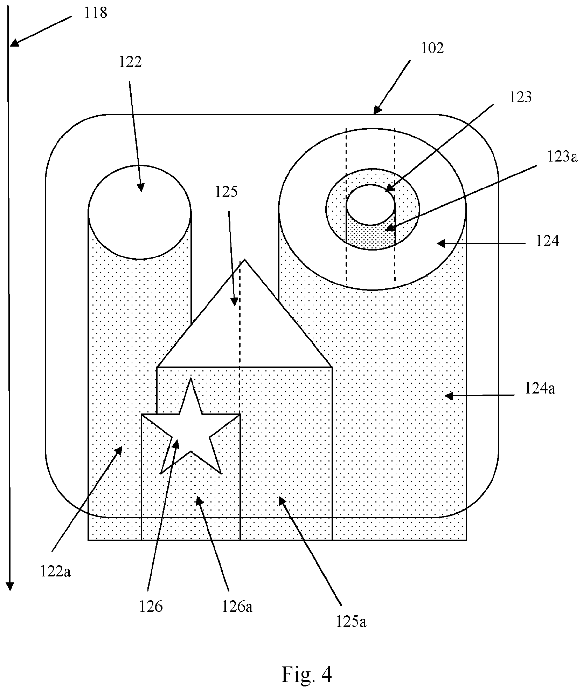

Referring to Figure 3, geometric data of objects to be built, such as in the form of an STL file, are received 201 by the computer 130, for example over the external data connection 135. The processing unit 131 receives 202 information on the location of the objects on the build platform 102. This location information may already be defined in the STL or the user may the select, using the user input device 135, where each object should be located on the build platform 102. For each layer, the processing unit 131 identifies areas of the layer that are to be solidified and determines 203 an order in which these areas should be scanned by the laser beam. An example of how this may be done is shown in Figure 4.

Figure 4 shows five separate areas (islands) 122 to 126 to be solidified for a particular layer. For each island 122 to 126, the processing unit projects a debris fallout zone 122a to 126a in a gas flow direction from the island. The processing unit 131 then determines, for each island 122 to 126, if any other island falls within the debris fallout zone. If so, the processing unit selects to form this other island before forming the island for which the debris fallout zone was determined. For example, in Figure 4, islands 125 and 126 fall within the fallout zone of island 122 and therefore, are selected to be scanned before island 122. Island 126 also falls within the fallout zone of island 125 and therefore, should be formed before island 125.

Rather than restricting ordering of the build to a complete island, the processing unit 131 may be arranged to select to form, in between forming different parts of the island, at least part of another island. Figure 4 illustrates two examples of this. In the first example, island 123 is completely surrounded by island 124. Accordingly, island 124 comprises parts that are both upwind and downwind of island 123. In such a scenario, the processing unit 131 selects to process the part of the island that is located downwind of island 123 before scanning island 123 and then scans the part of the island 124 that is upwind of island 123. The part of island 124 that is neither upwind nor downwind of island 123 may be scanned before or after island 123 and the selection of the scanning order of these parts may be based on other criteria, such as scan speed. The different parts of island 124 are illustrated by the dotted lines. In the second example, rather than scanning all of island 125 after scanning island 126, the part of island 125 that is not upwind of island 126 may be scanned before island 126. There may be reasons for scanning part of island 125 ahead of island 126, such as to optimize scan speed, variations in material composition and/or focal position.

In this embodiment, the processing unit 131 carries out this process for each layer.

However, in another embodiment, rather than calculating a scanning order for each layer, it may be possible to determine an order for multiple layers from a single analysis. For example, a fallout zone could be determined from a footprint of each object on the build platform 102, the order being determined based upon whether other objects fall within a debris fallout zone calculated based on this footprint. Even though for some layers the debris fallout zone may be smaller than that calculated from the footprint, such a method may provide a reasonable generalization that reduces the amount of processing required in determining an order in which the parts should be built.

The selected order of scanning the parts may be displayed to the user and the user may be able to change the order. The user can then activate the build to cause the processing unit to control 204 the optical module 106 and laser module 105 to scan the powder layers to form the islands in the selected order.

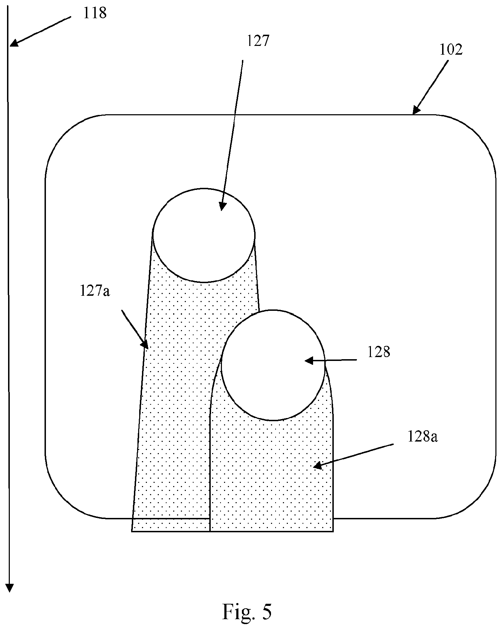

In the embodiment shown in Figure 4, the debris fallout zones are projected by extending straight lines in the gas flow direction from edges of the islands. However, other projections of the fallout zones could be used. Two examples are shown in Figure 5. For island 127, a fallout zone 127a is projected as diverging straight lines at a slight angle to the gas flow direction to take into account slight turbulence in the gas flow that may cause the debris to be deposited beyond the outmost edges of the island in a direction perpendicular to the gas flow direction. A similar principal is embodied by island 128 and fallout zone 128a, where an initially curved border to the fallout zone is used to model that locally debris may be thrown out by the impact of the laser beam on the powder layer but further from the island the debris is more likely to be carried away along a straighter path by the gas flow.

In a further embodiment, rather than the processing unit selecting the order in which islands are scanned, a user may select an order in which islands are built. This may be achieved by the processing unit 131 causing the display 133 to display images similar to those shown in Figures 4 and 5 so that the user can select the order islands are scanned based upon this visualisation of the fallout zones. The processing unit 131 then receives user inputs from the user input device of the order in which islands should be scanned.

It will be understood that in the above description, the islands may come together in earlier or later layers so as to form a single object or may remain separate so as to form one or more separate objects.

In a further embodiment (not shown), the processing unit selects a location of objects in the powder bed based upon a direction W the wiper 109 spreads powder across the powder bed 104. In particular, the locations of the objects in the powder bed may be selected such that debris generated by solidification of one area of a powder bed is not spread by the wiper to another area of the powder bed to be solidified, such as an area to be solidified in a subsequent powder layer. Such a task may also be carried out manually by a user with the aid of a computer. For example, processing unit 131 may cause the display 133 to display debris spreading zones for the objects whose locations have been identified such that the user can select locations in the powder bed for further objects based upon the displayed debris spreading zones.

It will be understood that alterations and modifications may be made to the invention without departing from the scope of the invention as defined herein. For example, the invention could be applied to a single island, wherein it is desirable to scan a downwind part of the island ahead of scanning an upwind part of the island.

## Claims

1. A selective laser solidification apparatus, comprising; a powder bed (104) onto which a powder layer can be deposited, a gas flow unit for passing a flow of gas over the powder bed (104) along a gas flow direction (118), a laser scanning unit (106) for scanning a laser beam over the powder layer to selectively solidify at least part of the powder layer to form one or more objects (103), **characterised by** a processing unit (131) for selecting a scanning sequence of the laser beam based on the gas flow direction (118), wherein the scanning sequence is selected such that debris produced during a scan is carried away from areas of the powder layer which are yet to be scanned, and the processing unit (131) selects to scan one area before another area because the area is located downwind in the gas flow direction of the other area.

2. A selective laser solidification apparatus according to claim 1, wherein the one or more objects (103) are formed through the solidification of separate islands (122, 123, 124, 125, 126, 127, 128) in at least one powder layer, the processing unit (131) arranged to select an order in which islands (122, 123, 124, 125, 126, 127, 128) are formed based upon the relative location of the islands (122, 123, 124, 125, 126, 127, 128) in the at least one powder layer and the gas flow direction (118).

3. A selective laser solidification apparatus according to claim 2, wherein the order in which islands (122, 123, 124, 125, 126, 127, 128) are formed is selected such that debris produced by forming an island is carried away from areas of the powder layer in which islands are yet to be formed.

4. A selective laser solidification apparatus according to claim 2 or claim 3, wherein the processing unit (131) selects to form at least part of an island before at least part of another island because the at least part of the island is located downwind in the gas flow direction of at least part of the other island.

5. A selective laser solidification apparatus according to any one of claims 2 to 6, wherein, for islands wherein a first island is located wholly downwind of a second island, the processing unit (131) is arranged to select to form the first island completely before forming the second island.

6. A selective laser solidification apparatus according to any one of claims 2 to 5, wherein, if a first island is located to at least partially surround a second island such that parts of the first island are downwind and other parts of the first island are upwind of the second island, the processing unit (131) is arranged to select to form at least part of the second island in between forming the downwind and upwind parts of the first island.

7. A selective laser solidification apparatus according to any one of the preceding claims, wherein the processing unit (131) determines an order in which areas should be scanned by projecting a debris fallout zone (122a, 123a, 124a, 125a, 126a, 127a, 128a) that would be created when solidifying each area and determining whether one or more other areas to be solidified fall within the debris fallout zone, the processing unit (131) selecting to solidify the one or more other areas that fall within the debris fallout zone (122a, 123a, 124a, 125a, 126a, 127a, 128a) before solidifying the area from which the debris fallout zone has been projected.

8. A selective laser solidification apparatus according to any one of the preceding claims, wherein the processing unit (131) is arranged to select a location on a build platform (102) for one or more of the objects (103), the processor (131) selecting the location based upon the debris fallout zone (122a, 123a, 124a, 125a, 126a, 127a, 128a) of an object whose locations has already been selected.

9. A method of selecting a scanning sequence of a laser beam in a selective laser solidification process, in which one or more objects (103) are formed layer-by-layer by, repeatedly, depositing a layer of powder on a powder bed (104) and scanning a laser beam over the deposited powder to selectively solidify at least part of the powder layers, wherein a gas flow is passed over the powder bed (104) in a gas flow direction (118), **characterised by** the method comprising selecting a scanning sequence of the laser beam based on the gas flow direction (118), wherein the scanning sequence is selected such that debris produced during a scan is carried away from areas of the powder layer which are yet to be scanned, and one area is selected to be scanned before another area because the area is located downwind in the gas flow direction of the other area, and the method is carried out by a computer (130).

10. A data carrier having instructions stored thereon, the instructions, when executed by a processor (131), cause the processor to carry out the method of selecting a scanning sequence of a laser beam in a selective laser solidification process, in which one or more objects (103) are formed layer-by-layer by, repeatedly, depositing a layer of powder on a powder bed (104) and scanning a laser beam over the deposited powder to selectively solidify at least part of the powder layers, wherein a gas flow is passed over the powder bed (104) in a gas flow direction (118), **characterised by** the method comprising selecting a scanning sequence of the laser beam based on the gas flow direction (118), wherein the scanning sequence is selected such that debris produced during a scan is carried away from areas of the powder layer which are yet to be scanned, and one area is selected to be scanned before another area because the area is located downwind in the gas flow direction of the other area.

11. Apparatus for selecting a scanning sequence of a laser beam in a selective laser solidification process, in which one or more objects (103) are formed layer-by-layer by, repeatedly, depositing a layer of powder on a powder bed (104) and scanning a laser beam over the deposited powder to selectively solidify at least part of the powder layers, wherein a gas flow is passed over the powder bed (104) in a gas flow direction (118), the apparatus comprising a processing unit (131), a display (133) and a user input device (135), **characterised by** the processing unit (131) being arranged to receive data on one or more objects (103), including a location of the objects (103) on a build platform (102), determine a debris fallout zone (122a, 123a, 124a, 125a, 126a, 127a, 128a), cause the display (133) to display an image of areas to be solidified, wherein the debris fallout zone (122a, 123a, 124a, 125a, 126a, 127a, 128a) is projected from each area, and receive a user input from the user input device (135) of an order in which the areas are to be scanned.

12. A data carrier for selecting a scanning sequence of a laser beam in a selective laser solidification process, in which one or more objects (103) are formed layer-by-layer by, repeatedly, depositing a layer of powder on a powder bed (104) and scanning a laser beam over the deposited powder to selectively solidify at least part of the powder layers, wherein a gas flow is passed over the powder bed (104) in a gas flow direction (118) **characterised by** the data carrier having instructions thereon, which, when executed by a processor (131), cause the processor (131) to receive data on one or more objects (103), including a location of the objects on a build platform (102), determine a debris fallout zone (122a, 123a, 124a, 125a, 126a, 127a, 128a), cause a display (133) to display an image of areas to be solidified, wherein the debris fallout zone (122a, 123a, 124a, 125a, 126a, 127a, 128a) is projected from each area, and receive a user input from a user input device (135) of an order in which the areas are to be scanned.

## Patentansprüche

1. Vorrichtung zur selektiven Laserverfestigung, umfassend: ein Pulverbett (104), auf dem eine Pulverschicht abgeschieden werden kann, eine Gasströmungseinheit zum Leiten einer Gasströmung über das Pulverbett (104) entlang einer Gasströmungsrichtung (118), eine Laserabtasteinheit (106) zum Abtasten eines Laserstrahls über die Pulverschicht, um zumindest einen Teil der Pulverschicht selektiv zu verfestigen und damit ein oder mehrere Objekte (103) zu bilden, **gekennzeichnet durch** eine Verarbeitungseinheit (131) zum Wählen einer Abtastabfolge des Laserstrahls auf Grundlage der Gasströmungsrichtung (118), wobei die Abtastfolge so gewählt ist, dass während einer Abtastung erzeugter Schmutz von Bereichen der Pulverschicht, die nun abzutasten sind, weggetragen wird und die Verarbeitungseinheit (131) eine Abtastung eines Bereichs vor einem anderen Bereich wählt, da der Bereich stromabwärts in der Gasströmungsrichtung des anderen Bereiches angeordnet ist.

2. Vorrichtung zur selektiven Laserverfestigung nach Anspruch 1, wobei das eine oder die mehreren Objekte (103) durch die Verfestigung separater Inseln (122, 123, 124, 125, 126, 127, 128) in zumindest einer Pulverschicht gebildet sind, wobei die Verarbeitungseinheit (131) derart angeordnet ist, eine Reihenfolge, in der Inseln (122, 123, 124, 125, 126, 127, 128) geformt werden, auf Grundlage der relativen Anordnung der Inseln (122, 123, 124, 125, 126, 127, 128) in der zumindest einen Pulverschicht und der Gasströmungsrichtung (118) zu wählen.

3. Vorrichtung zur selektiven Laserverfestigung nach Anspruch 2, wobei die Reihenfolge, in der Inseln (122, 123, 124, 125, 126, 127, 128) gebildet werden, so gewählt ist, dass durch Bildung einer Insel erzeugter Schmutz von Bereichen der Pulverschicht, in der Inseln nun zu formen sind, weggetragen wird.

4. Vorrichtung zur selektiven Laserverfestigung nach einem der Ansprüche 2 oder 3, wobei die Verarbeitungseinheit (131) die Bildung zumindest eines Teils einer Insel vor zumindest einem Teil einer anderen Insel wählt, da das zumindest eine Teil der Insel stromabwärts in der Gasströmungsrichtung des zumindest einen Teils der anderen Insel angeordnet ist.

5. Vorrichtung zur selektiven Laserverfestigung nach einem der Ansprüche 2 bis 4, wobei für Inseln, wobei eine erste Insel vollständig stromabwärts einer zweiten Insel angeordnet ist, die Verarbeitungseinheit (131) derart angeordnet ist, vor der Bildung der zweiten Insel die vollständige Bildung der ersten Insel zu wählen.

6. Vorrichtung zur selektiven Laserverfestigung nach einem der Ansprüche 2 bis 5, wobei, wenn eine erste Insel so angeordnet ist, dass sie eine zweite Insel zumindest teilweise umgibt, so dass Teile der ersten Insel stromabwärts und andere Teile der ersten Insel stromaufwärts der zweiten Insel liegen, die Verarbeitungseinheit (131) so angeordnet ist, die Bildung zumindest eines Teils der zweiten Insel zwischen der Bildung der stromabwärtigen und stromaufwärtigen Teile der ersten Insel zu wählen.

7. Vorrichtung zur selektiven Laserverfestigung nach einem der vorhergehenden Ansprüche, wobei die Verarbeitungseinheit (131) eine Reihenfolge, in der Bereiche abgetastet werden sollen, bestimmt, indem eine Schmutzausfallzone (122a, 123a, 124a, 125a, 126a, 127a, 128a) projiziert wird, die erzeugt würde, wenn jeder Bereich verfestigt wird, und bestimmt wird, ob ein oder mehrere andere zu verfestigende Bereiche in die Schmutzausfallzone fallen, wobei die Verarbeitungseinheit (131) die Verfestigung des einen oder der mehreren anderen Bereiche, die in die Schmutzausfallzone (122a, 123a, 124a, 125a, 126a, 127a, 128a) fallen, wählt, bevor der Bereich verfestigt wird, von dem die Schmutzausfallzone projiziert worden ist.

8. Vorrichtung zur selektiven Laserverfestigung nach einem der vorhergehenden Ansprüche, wobei die Verarbeitungseinheit (131) derart angeordnet ist, einen Ort an einer Aufbauplattform (102) für ein oder mehrere der Objekte (103) zu wählen, wobei der Prozessor (131) den Ort basierend auf der Schmutzausfallzone (122a, 123a, 124a, 125a, 126a, 127a, 128a) eines Objekts wählt, dessen Orte bereits gewählt worden sind.

9. Verfahren zum Wählen einer Abtastfolge eines Laserstrahls in einem Prozess zur selektiven Laserverfestigung, bei dem ein oder mehrere Objekte (103) Schicht an Schicht durch wiederholtes Abscheiden einer Pulverschicht auf einem Pulverbett (104) und Abtasten eines Laserstrahls über das abgeschiedene Pulver gebildet werden, um zumindest einen Teil der Pulverschichten selektiv zu verfestigen, wobei eine Gasströmung über das Pulverbett (104) in einer Gasströmungsrichtung (118) geleitet wird, **dadurch gekennzeichnet, dass** das Verfahren umfasst, dass eine Abtastfolge des Laserstrahls basierend auf der Gasströmungsrichtung (118) gewählt wird, wobei die Abtastfolge so gewählt ist, dass während einer Abtastung erzeugter Schmutz von Bereichen der Pulverschicht, die nun abzutasten sind, weggetragen wird und eine Abtastung eines Bereichs vor einem anderen Bereich gewählt wird, da der Bereich stromabwärts in der Gasströmungsrichtung des anderen Bereiches angeordnet ist, und wobei das Verfahren von einem Computer (130) ausgeführt wird.

10. Datenträger mit darauf gespeicherten Anweisungen, wobei die Anweisungen, wenn sie von einem Prozessor (131) ausgeführt werden, bewirken, dass der Prozessor das Verfahren zum Auswählen einer Abtastfolge eines Laserstrahls in einem Prozess zur selektiven Laserverfestigung, bei dem ein oder mehrere Objekte (103) Schicht an Schicht durch wiederholtes Abscheiden einer Pulverschicht auf einem Pulverbett (104) und Abtasten eines Laserstrahls über das abgeschiedene Pulver gebildet werden, um zumindest einen Teil der Pulverschichten selektiv zu verfestigen, wobei eine Gasströmung über das Pulverbett (104) in einer Gasströmungsrichtung (118) geleitet wird, **dadurch gekennzeichnet, dass** das Verfahren umfasst, dass eine Abtastfolge des Laserstrahls basierend auf der Gasströmungsrichtung (118) gewählt wird, wobei die Abtastfolge so gewählt ist, dass während einer Abtastung erzeugter Schmutz von Bereichen der Pulverschicht, die nun abzutasten sind, weggetragen wird und eine Abtastung eines Bereichs vor einem anderen Bereich gewählt wird, da der Bereich stromabwärts in der Gasströmungsrichtung des anderen Bereiches angeordnet ist.

11. Vorrichtung zum Auswählen einer Abtastfolge eines Laserstrahls in einem Prozess für selektive Laserverfestigung, bei dem ein oder mehrere Objekte (103) Schicht an Schicht durch wiederholtes Abscheiden einer Pulverschicht auf einem Pulverbett (104) und Abtasten eines Laserstrahls über das abgeschiedene Pulver gebildet werden, um zumindest einen Teil der Pulverschichten selektiv zu verfestigen, wobei eine Gasströmung über das Pulverbett (104) in einer Gasströmungsrichtung (118) geleitet wird, wobei die Vorrichtung eine Verarbeitungseinheit (131), ein Display (133) und eine Nutzereingabevorrichtung (135) umfasst, **dadurch gekennzeichnet, dass** die Verarbeitungseinheit (131) derart angeordnet ist, Daten an einem oder mehreren Objekten (103) zu empfangen, einschließlich einem Ort der Objekte (103) an einer Aufbauplattform (102), eine Schmutzausfallzone (122a, 123a, 124a, 125a, 126a, 127a, 128a) zu bestimmen, zu bewirken, dass das Display (133) ein Bild von zu verfestigenden Bereichen zeigt, wobei die Schmutzausfallzone (122a, 123a, 124a, 125a, 126a, 127a, 128a) von jedem Bereich projiziert ist, und eine Nutzereingabe von der Nutzereingabevorrichtung (135) bezüglich einer Reihenfolge, in der die Bereiche abzutasten sind, zu empfangen.

12. Datenträger zum Auswählen einer Abtastfolge eines Laserstrahls in einem Prozess für selektive Laserverfestigung, bei dem ein oder mehrere Objekte (103) Schicht an Schicht durch wiederholtes Abscheiden einer Pulverschicht auf einem Pulverbett (104) und Abtasten eines Laserstrahls über das abgeschiedene Pulver gebildet werden, um zumindest einen Teil der Pulverschichten selektiv zu verfestigen, wobei eine Gasströmung über das Pulverbett (104) in einer Gasströmungsrichtung (118) geleitet wird, **dadurch gekennzeichnet, dass** der Datenträger Anweisungen darauf enthält, die bei Ausführung durch einen Prozessor (131) zur Folge haben, dass der Prozessor (131) Daten an einem oder mehreren Objekten (103) empfängt, einschließlich einem Ort der Objekte (103) an einer Aufbauplattform (102), eine Schmutzausfallzone (122a, 123a, 124a, 125a, 126a, 127a, 128a) bestimmt, bewirkt, dass das Display (133) ein Bild von zu verfestigenden Bereichen zeigt, wobei die Schmutzausfallzone (122a, 123a, 124a, 125a, 126a, 127a, 128a) von jedem Bereich projiziert ist, und eine Nutzereingabe von der Nutzereingabevorrichtung (135) bezüglich einer Reihenfolge, in der die Bereiche abzutasten sind, empfängt.

## Revendications

1. Appareil de solidification sélective par laser, comprenant : un lit de poudre (104) sur lequel une couche de poudre peut être déposée, une unité d'écoulement de gaz pour faire passer un écoulement de gaz sur le lit de poudre (104) le long d'une direction d'écoulement de gaz (118), une unité de balayage laser (106) pour balayer un faisceau laser sur la couche de poudre afin de solidifier de manière sélective au moins une partie de la couche de poudre pour former un ou plusieurs objets (103), **caractérisé par** une unité de traitement (131) pour sélectionner une séquence de balayage du faisceau laser sur la base de la direction d'écoulement de gaz (118), dans lequel la séquence de balayage est sélectionnée de sorte que des débris produits lors d'un balayage soient emportés loin des régions de la couche de poudre qui n'ont pas encore été balayées, et dans lequel l'unité de traitement (131) effectue une sélection pour balayer une région avant une autre région car la région est située dans le sens du vent dans la direction d'écoulement de gaz de l'autre région.

2. Appareil de solidification sélective par laser selon la revendication 1, dans lequel le ou les plusieurs objets (103) sont formés par la solidification d'îlots séparés (122, 123, 124, 125, 126, 127, 128) dans au moins une couche de poudre, l'unité de traitement (131) étant agencée pour sélectionner un ordre dans lequel les îlots (122, 123, 124, 125, 126, 127, 128) sont formés sur la base de l'emplacement relatif des îlots (122, 123, 124, 125, 126, 127, 128) dans l'au moins une couche de poudre et de la direction d'écoulement de gaz (118).

3. Appareil de solidification sélective par laser selon la revendication 2, dans lequel l'ordre dans lequel les îlots (122, 123, 124, 125, 126, 127, 128) sont formés est sélectionné de sorte que des débris produits en formant un îlot soient emportés loin des régions de la couche de poudre où des îlots n'ont pas encore été formés.

4. Appareil de solidification sélective par laser selon la revendication 2 ou 3, dans lequel l'unité de traitement (131) effectue une sélection pour former au moins une partie d'un îlot avant au moins une partie d'un autre îlot car l'au moins une partie de l'îlot est située dans le sens du vent dans la direction d'écoulement de gaz de l'au moins une partie de l'autre îlot.

5. Appareil de solidification sélective par laser selon l'une quelconque des revendications 2 à 6, dans lequel, pour des îlots dans lesquels un premier îlot est situé entièrement dans le sens du vent d'un deuxième îlot, l'unité de traitement (131) est agencée pour effectuer une sélection pour former le premier îlot complètement avant de former le deuxième îlot.

6. Appareil de solidification sélective par laser selon l'une quelconque des revendications 2 à 5, dans lequel, si un premier îlot est situé de manière à entourer au moins partiellement un deuxième îlot de sorte que des parties du premier îlot soient dans le sens du vent et que d'autres parties du premier îlot soient dans le sens contraire du vent du deuxième îlot, l'unité de traitement (131) est agencée pour effectuer une sélection pour former au moins une partie du deuxième îlot entre la formation des parties dans le sens du vent et des parties dans le sens contraire du vent du premier îlot.

7. Appareil de solidification sélective par laser selon l'une quelconque des revendications précédentes, dans lequel l'unité de traitement (131) détermine un ordre dans lequel des régions devraient être balayées en projetant une zone de chute de débris (122a, 123a, 124a, 125a, 126a, 127a, 128a) qui serait créée lors de la solidification de chaque région et en déterminant si une ou plusieurs autres régions devant être solidifiées se situent à l'intérieur de la zone de chute de débris, l'unité de traitement (131) effectuant une sélection pour solidifier la ou les plusieurs autres régions qui se situent à l'intérieur de la zone de chute de débris (122a, 123a, 124a, 125a, 126a, 127a, 128a) avant de solidifier la région à partir de laquelle la zone de chute de débris a été projetée.

8. Appareil de solidification sélective par laser selon l'une quelconque des revendications précédentes, dans lequel l'unité de traitement (131) est agencée pour sélectionner un emplacement sur une plateforme de construction (102) pour un ou plusieurs des objets (103), le processeur (131) sélectionnant l'emplacement sur la base de la zone de chute de débris (122a, 123a, 124a, 125a, 126a, 127a, 128a) d'un objet dont les emplacements ont déjà été sélectionnés.

9. Procédé de sélection d'une séquence de balayage d'un faisceau laser dans un procédé de solidification sélective par laser, dans lequel un ou plusieurs objets (103) sont formés couche par couche, en déposant, à plusieurs reprises, une couche de poudre sur un lit de poudre (104) et en balayant un faisceau laser sur la poudre déposée pour solidifier de manière sélective au moins une partie des couches de poudre, où un écoulement de gaz est amené à passer sur le lit de poudre (104) dans une direction d'écoulement de gaz (118), **caractérisé en ce que** le procédé comprend le fait de sélectionner une séquence de balayage du faisceau laser sur la base de la direction d'écoulement de gaz (118), dans lequel la séquence de balayage est sélectionnée de sorte que des débris produits lors d'un balayage soient emportés loin des régions de la couche de poudre qui n'ont pas encore été balayées, et une région est sélectionnée pour être balayée avant une autre région car la région est située dans le sens du vent dans la direction d'écoulement de gaz de l'autre région, et le procédé est effectué par un ordinateur (130).

10. Support de données ayant des instructions stockées sur celui-ci, les instructions, lorsqu'elles sont exécutées par un processeur (131), amènent le processeur à effectuer le procédé de sélection d'une séquence de balayage d'un faisceau laser dans un procédé de solidification sélective par laser, dans lequel un ou plusieurs objets (103) sont formés couche par couche, en déposant, à plusieurs reprises, une couche de poudre sur un lit de poudre (104) et en balayant un faisceau laser sur la poudre déposée pour solidifier de manière sélective au moins une partie des couches de poudre, où un écoulement de gaz est amené à passer sur le lit de poudre (104) dans une direction d'écoulement de gaz (118), **caractérisé en ce que** le procédé comprend le fait de sélectionner une séquence de balayage du faisceau laser sur la base de la direction d'écoulement de gaz (118), dans lequel la séquence de balayage est sélectionnée de sorte que des débris produits lors d'un balayage soient emportés loin des régions de la couche de poudre qui n'ont pas encore été balayées, et une région est sélectionnée pour être balayée avant une autre région car la région est située dans le sens du vent dans la direction d'écoulement de gaz de l'autre région.

11. Appareil pour sélectionner une séquence de balayage d'un faisceau laser dans un procédé de solidification sélective par laser, dans lequel un ou plusieurs objets (103) sont formés couche par couche, en déposant, à plusieurs reprises, une couche de poudre sur un lit de poudre (104) et en balayant un faisceau laser sur la poudre déposée pour solidifier de manière sélective au moins une partie des couches de poudre, où un écoulement de gaz est amené à passer sur le lit de poudre (104) dans une direction d'écoulement de gaz (118), l'appareil comprenant une unité de traitement (131), un dispositif d'affichage (133) et un dispositif d'entrée utilisateur (135), **caractérisé en ce que** l'unité de traitement (131) est agencée pour recevoir des données sur un ou plusieurs objets (103), y compris un emplacement des objets (103) sur une plateforme de construction (102), pour déterminer une zone de chute de débris (122a, 123a, 124a, 125a, 126a, 127a, 128a), pour amener le dispositif d'affichage (133) à afficher une image des régions devant être solidifiées, où la zone de chute de débris (122a, 123a, 124a, 125a, 126a, 127a, 128a) est projetée à partir de chaque région, et pour recevoir une entrée utilisateur à partir du dispositif d'entrée utilisateur (135) d'un ordre dans lequel les régions doivent être balayées.

12. Support de données pour sélectionner une séquence de balayage d'un faisceau laser dans un procédé de solidification sélective par laser, dans lequel un ou plusieurs objets (103) sont formés couche par couche en déposant, à plusieurs reprises, une couche de poudre sur un lit de poudre (104) et en balayant un faisceau laser sur la poudre déposée pour solidifier de manière sélective au moins une partie des couches de poudre, où un écoulement de gaz est amené à passer sur le lit de poudre (104) dans une direction d'écoulement de gaz (118), **caractérisé en ce que** le support de données a des instructions sur celui-ci, qui, lorsqu'elles sont exécutées par un processeur (131), amènent le processeur (131) à recevoir des données sur un ou plusieurs objets (103), y compris un emplacement des objets sur une plateforme de construction (102), à déterminer une zone de chute de débris (122a, 123a, 124a, 125a, 126a, 127a, 128a), à amener un dispositif d'affichage (133) à afficher une image des régions devant être solidifiées, où la zone de chute de débris (122a, 123a, 124a, 125a, 126a, 127a, 128a) est projetée à partir de chaque région, et à recevoir une entrée utilisateur à partir d'un dispositif d'entrée utilisateur (135) d'un ordre dans lequel les régions doivent être balayées.
